# EUROPEAN PATENT SPECIFICATION

(11) **EP 3 112 649 B1**
(45) Date of publication and mention of the grant of the patent: **16.03.2022**
(21) Application number: 16175204.3
(22) Date of filing: 20.06.2016
(51) Int. Cl.: F02K 3/06, F02C 3/107, F02C 7/06

(54) **GAS TURBINE ENGINE WITH FAN-TIED INDUCER SECTION**
GASTURBINENMOTOR MIT AM GEBLÄSE BEFESTIGTEN INDUKTORABSCHNITT
MOTEUR À TURBINE À GAZ AVEC SECTION INDUCTEUR ATTACHÉE À UNE SOUFFLANTE

(30) Priority: 01.07.2015 US 201514788913
(43) Date of publication of application: 04.01.2017
(73) Proprietor: Raytheon Technologies Corporation, Farmington, CT 06032 (US)
(72) Inventor: KUPRATIS, Daniel Bernard, Wallingford, CT 06492 (US); SCHWARZ, Frederick M., Glastonbury, CT 06033 (US)
(74) Representative: Dehns

(56) References cited:
- EP-A1- 3 070 314
- US-A1- 2013 224 003
- US-A1- 2015 152 787

## Description

### BACKGROUND OF THE INVENTION

This disclosure relates to a gas turbine engine with a fan-tied inducer section.

A typical jet engine has multiple shafts or spools that transmit torque between turbine and compressor sections of the engine. In one example, a low speed spool generally includes a low shaft that interconnects a fan, a low pressure compressor, and a low pressure turbine.

The low pressure turbine drives the low shaft, which drives the low pressure compressor. A geared architecture connects the low shaft to the fan. Air exiting the fan at the root has relatively low energy, which generates a swirling effect that makes it difficult to efficiently feed air into the low pressure compressor.

US 2013/244003 A1 discloses a prior art gas turbine engine as set forth in the preamble of claim 1.

### SUMMARY OF THE INVENTION

According to the invention there is provided a gas turbine engine as set forth in claim 1.

In an embodiment according to the previous embodiment, the strut is further supported by a thrust bearing such that the fan rotor can rotate relative to the strut.

In another embodiment according to any of the previous embodiments, the at least one inducer stage comprises a plurality of inducer stages coupled to the fan rotor.

In another embodiment according to any of the previous embodiments, each inducer stage comprises one or more blades fixed for rotation with the fan rotor and the core inlet stator fixed to a non-rotating engine structure, and wherein the core inlet stator includes one or more vanes.

In another embodiment according to any of the previous embodiments, the first compressor is positioned immediately aft of the at least one inducer stage.

In another embodiment according to any of the previous embodiments, the at least one inducer stage is positioned forward of the speed reduction device.

In another embodiment according to any of the previous embodiments, the core inlet stator comprises a variable vane.

In another embodiment according to any of the previous embodiments, the core inlet stator is heated for anti-icing.

In another embodiment according to any of the previous embodiments, the one or more inducer blades are heated for anti-icing.

In another embodiment according to any of the previous embodiments, the speed change device comprises a gearbox including a sun gear in meshing engagement with star gears and a ring gear in meshing engagement with the star gears, and wherein the ring gear drives the fan, and wherein the gearbox has a gear reduction ratio of greater than about 2.3.

In another embodiment according to any of the previous embodiments, the speed change device comprises a gearbox including a sun gear in meshing engagement with a plurality of planetary gears supported by a planet carrier and a ring gear in meshing engagement with the planet gears, and wherein the ring gear is fixed and the planet carrier provides input to the fan, and wherein the gearbox has a gear reduction ratio of greater than about 2.3.

In another embodiment according to any of the previous embodiments, the at least one inducer stage comprises a plurality of inducer stages coupled to the fan rotor, and wherein each inducer stage comprises one or more inducer blades fixed for rotation with the fan rotor and a core inlet stator fixed to a non-rotating engine structure, and with the core stator including one or more vanes.

These and other features of this application will be best understood from the following specification and drawings, the following of which is a brief description.

### BRIEF DESCRIPTION OF THE DRAWINGS

Figure 1 schematically illustrates a gas turbine engine, which is present to assist in the understanding of the invention and is not part of the claimed invention.
Figure 2 is one example of a schematic representation of an engine upper half including an inducer section coupled to a fan, which is present to assist in the understanding of the invention and is not part of the claimed invention.
Figure 3 is another example of a schematic representation of an engine upper half including an inducer coupled to the fan before the core inlet stator, which is present to assist in the understanding of the invention and is not part of the claimed invention.
Figure 4 is another example of a schematic representation of an engine upper half including an inducer section coupled to a fan, which is present to assist in the understanding of the invention and is not part of the claimed invention.
Figure 5A is a schematic representation of a speed reduction device comprises comprising a star gear type gearbox, which is present to assist in the understanding of the invention and is not part of the claimed invention.
Figure 5B is a schematic representation of a speed reduction device comprising a planetary gear type gearbox, which is present to assist in the understanding of the invention and is not part of the claimed invention.
Figure 6 shows an engine falling outside the scope of the claims.
Figure 7 shows an embodiment according to the claimed invention.

### DETAILED DESCRIPTION

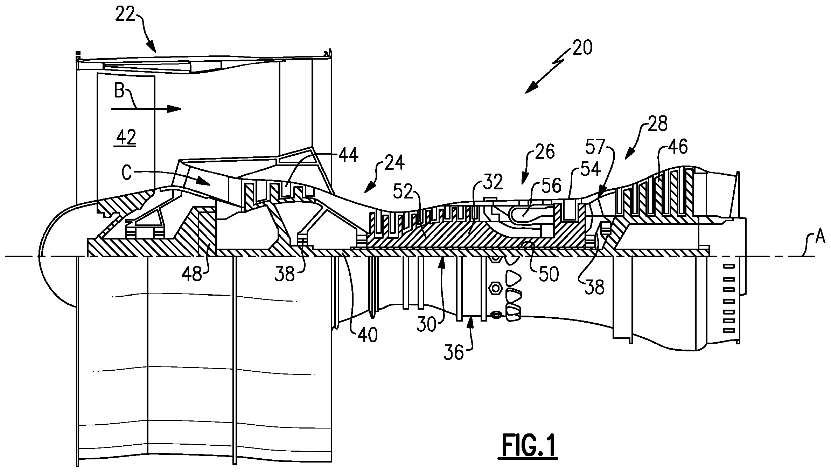

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 is connected to the fan 42 through a speed reduction device, such as a geared architecture 48 for example, to drive the fan 42 at a lower speed than the low speed spool 30. The high speed spool 32 includes an outer shaft 50 that interconnects a high pressure compressor 52 and high pressure turbine 54. A combustor 56 is arranged between the high pressure compressor 52 and the high pressure turbine 54. A mid-turbine frame 57 of the engine static structure 36 is arranged generally between the high pressure turbine 54 and the low pressure turbine 46. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion.

The engine 20 in one example is a high-bypass geared aircraft engine. In a further example, the engine 20 bypass ratio is greater than about six (6:1), with an example embodiment being greater than ten (10:1), the geared architecture 48 is an epicyclic gear train, such as a planetary gear system or other gear system, with a gear reduction ratio of greater than about 2.3 and the low pressure turbine 46 has a pressure ratio that is greater than about five (5:1). In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.5:1. It should be understood, however, that the above parameters are only exemplary of one embodiment of a geared architecture engine.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm per hour of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram deg R) / 518.7)^0.5] (where deg R= K × 9/5). The "Low corrected fan tip speed" as disclosed herein according to one non-limiting embodiment is less than about 1150 ft / second (350.5 m/s).

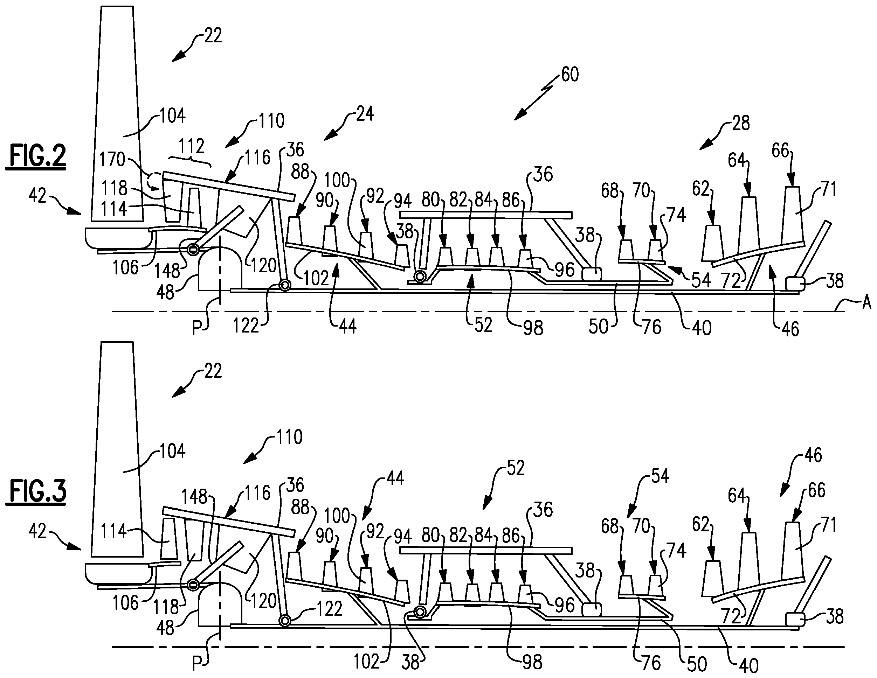

A gas turbine engine 60 shown in Figure 2 includes a two-spool turbofan as described above, which generally incorporates a fan section 22, a compressor section 24 with high 52 and low 44 pressure compressors, and a turbine section 28 with high 54 and low 46 pressure turbines. In this configuration, the low pressure turbine 46 is comprised of a plurality of stages. In the example shown, the low pressure turbine 46 includes a first stage 62, a second stage 64, and a third stage 66. The high pressure turbine 54 is comprised of a first stage 68 and a second stage 70 that are positioned forward of the plurality of stages 62, 64, 66 of the low pressure turbine 46.

Each of the stages for the high 54 and low 46 pressure turbines includes a plurality of blades coupled to a respective rotor. In the example shown, blades 71 of the low pressure turbine 46 are coupled to a first rotor 72 and blades 74 of the high pressure turbine 54 are coupled to a second rotor 76. The first rotor 72 is configured to drive the low shaft 40 and the second rotor 76 is configured to drive the high shaft 50. Each stage of the high 54 and low 46 pressure turbines also includes a plurality of vanes (not shown) interspersed with the blades where the vanes are mounted to a static engine structure 36.

The high pressure compressor 52 is comprised of first 80, second 82, third 84, and fourth 86 stages. The low pressure compressor 44 is comprised of first 88, second 90, third 92, and fourth 94 stages that are positioned forward of the plurality of stages 80, 82, 84, 86 of the high pressure compressor 52. Each of the stages of the high pressure compressor 52 includes a plurality of blades 96 that are coupled to a rotor 98 that is driven by the high shaft 50. Each of the stages of the low pressure compressor 44 is comprised of blades 100 that are coupled to a rotor 102 that is driven by the low shaft 40. Each stage of the high 52 and low 44 pressure compressors also includes a plurality of vanes (not shown) interspersed with the blades where the vanes are mounted to a static engine structure 36. Various bearings 38 rotatably support the high 50 and low 40 shafts as known.

The fan section 22 includes a fan 42 that is driven by the geared architecture 48. The fan 42 is comprised of a plurality of fan blades 104 that are coupled to a fan rotor 106 for rotation about the axis. The geared architecture 48 couples the low shaft 40 to the fan rotor 106 such that the fan rotor 106 rotates at a lower speed than the low shaft 40. The geared architecture 48 is an epicyclic gear arrangement that includes a plurality of star or planet gears driven by a sun gear fixed for rotation with the low shaft 40. The star gears drive a ring gear that is configured to drive the fan rotor 106.

The engine 60 also includes an inducer section 110 that comprises a fan-tied compressor stage, i.e. the inducer section is an additional compressor stage that is connected to the fan rotor 106. The inducer section 110 serves to efficiently feed the low pressure compressor 44 a more controlled/stabilized air flow. Alternatively, the inducer may allow the manufacturer to make one engine model without the inducer and use the exact same core on an engine model with the inducer. This approach would be a way of improving manufacturing efficiencies since the engine core with the inducer could in turn be used at higher thrust while maintaining the same peak core temperatures due to the higher air flows provided by the additional inducer stage or stages. In this way most of the engine part numbers would be common between the two models, thereby eliminating duplication in engineering work, development work, toolings, and other savings.

In one example, the inducer section 110 includes at least one inducer stage 112 that is driven by the fan rotor 106. The inducer stage 112 comprises one or more blade rows 114 fixed for rotation with the fan rotor 106 and a core stator structure 116 fixed to the non-rotating static engine structure 36. The core stator structure 116 is configured to facilitate reducing swirl coming off of the fan and diffusing the air flow. The core stator structure 116 includes one or more vanes 118 fixed to the static engine structure 36. Additional support for the stator structure 116 is provided by a connection to a strut 120. A bearing 122 rotatably supports the shaft 40 for rotation relative to the strut 120 and stator structure 116. A thrust bearing 148 also provides support for the fan and inducer assembly.

In one example shown in Figure 2, the core stator structure 116 is positioned axially between the fan 42 and the blades 114 of the inducer stage 112.

In another example shown in Figure 3, the core stator structure 116 is positioned aft of the blades 114 of the inducer stage 112.

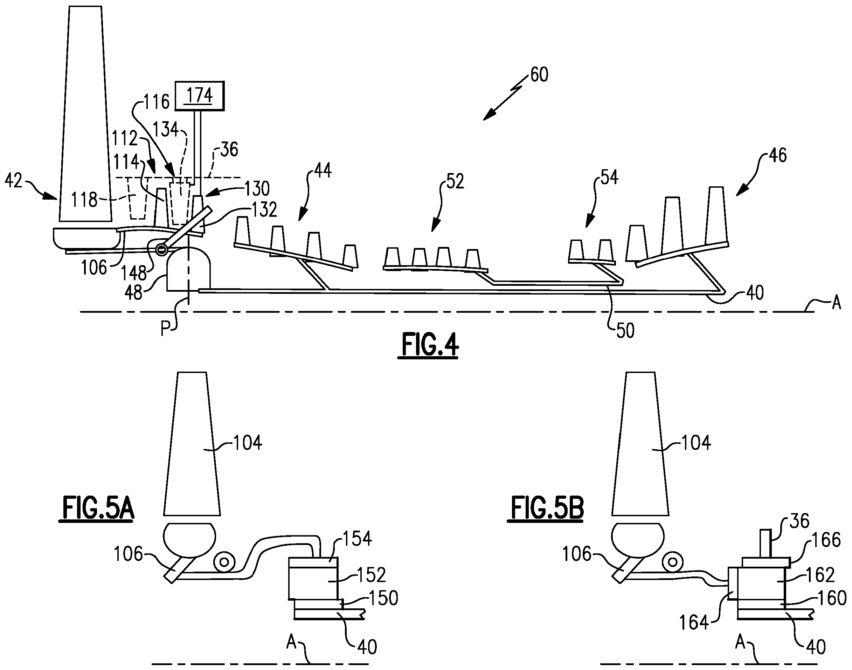

In another example shown in Figure 4, the at least one inducer stage comprises a plurality of inducer stages 112, 130 coupled to the fan rotor 106. Figure 4 shows an example configuration having a first inducer stage 112 and a second inducer stage 130 that is configured similarly to the first inducer stage 112. The second inducer stage 130 comprises one or more blades 132 fixed for rotation with the fan rotor 106 and a core stator structure 116 fixed to the static engine structure 36 as described above. The core stator structure 116 can optionally include a second set of vanes 134 positioned aft of the blades 114 of the first inducer stage 112 and forward of the blades 132 of the second inducer stage 130. Optionally the vanes could be positioned respectively aft of each set of blades in a manner similar to that shown in Figure 3.

In one example, the geared architecture 48 comprises a gearbox. Figures 5A and 5B shows two different examples of gearboxes. Figure 5A shows a gearbox that comprises a star gear configuration. This configuration includes a sun gear 150 in meshing engagement with star gears 152 and a ring gear 154 in meshing engagement with the star gears 152. The sun gear 150 is driven by the shaft 40 and the ring gear 154 at drives the fan rotor 106.

Figure 5B shows a gearbox that comprises a planetary gear configuration. This configuration includes a sun gear 160 in meshing engagement with a plurality of planetary gears 162 supported by a planet carrier 164 and a ring gear 166 in meshing engagement with the planet gears 162. The ring gear 166 is fixed to a static structure 36 and the planet carrier 164 provides input to the fan rotor 106.

In either of these configurations, the gearbox defines a gearbox axial center-plane P (see Figure 2-4).

In one example, the low pressure compressor 44 is positioned immediately aft of the inducer section 110 and the inducer section 110 is positioned forward of the gearbox axial center-plane P.

In one example, the low pressure compressor 44 is positioned aft of the gearbox axial center-plane P.

The various configurations described above provide a geared turbofan with a slow turning, fan-tied auxiliary compressor stage or stages, and a separate higher speed low pressure compressor/low pressure turbine that are tied to a common single shaft. The fan-tied low pressure compressor stage or stages provide an inducer that is connected to the fan rotor immediately aft of the fan. This provides several benefits.

For example, the configurations disclosed above improve engine operability by fractionally reducing the pressure rise required of the higher speed low pressure compressor and moving that fractional pressure rise to the lower speed fan rotor utilizing the associated inducer stage. Moving low pressure compressor stages from the higher speed low pressure compressor shaft to the slower rotating fan rotor improves engine operability by reducing the inertia of the higher speed low pressure compressor and turbine, which are tied to the same single shaft. Relative to a configuration that does not have an inducer section, the inertia of the stages in an inducer configuration is decreased by a factor of 1/GR2 where GR2 is the square of the speed reduction ratio of the gear. For example, if the gear ratio GR is 2, locating a stage as fan-tied reduces the inertia of that low compressor stage by the factor of 0.25 relative to locating the stage within the higher speed low pressure compressor.

In another example, one or more of the core inlet stator vanes 118 could be a variable vane that rotates along a spanwise axis (as schematically indicated by dashed arrow 170 in Figure 2) in order to better align the airfoil to the input flow. This would be especially desirable in reducing takeoff peak temperatures in the core.

In another example, the core inlet stator vanes 118 and/or the inducer blades 114, 132 could be heated for anti-icing conditions. A heating device is schematically shown at 174 in Figure 4.

In one example, the fan 42 and inducer section 110 turn in the same direction as the fan drive turbine using a speed reduction device or a gearbox of the planet type as shown in Figure 5B. In this configuration the sun gear 160 provides the input torque, the ring gear 166 is fixed to the supporting structure 36 and the carrier 164 of the gears 162 between the sun 160 and the ring gear 166 is connected to the fan hub 106 and provides the rotational torque required by the fan 42.

Further, for configurations where the gear is a star gear configuration that results in the fan rotating in an opposite direction to the rotational direction of the input shaft from the turbine (see Figure 5A), the fan-tied low pressure compressor enables even more pressure to be addressed by the fan rotor 106 as the fan-tied low pressure compressor more easily accommodates more work being done by the fan rotor 106 than the counter rotating high speed low pressure compressor does without the presence of a fan-tied compressor stage. This also increases the supercharging temperature of the high speed low pressure compressor and, thus, results in a lower tip Mach number for the first rotor of the high speed low pressure compressor, resulting improved efficiency.

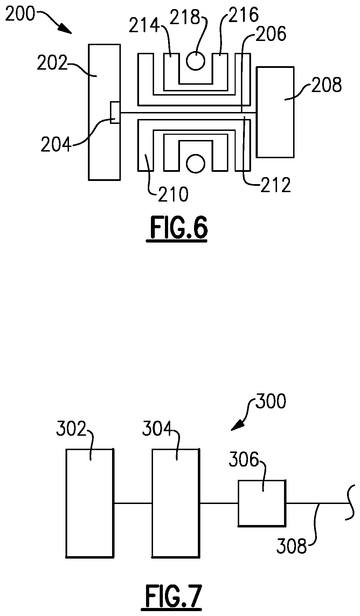

Figure 6 shows an engine 200 falling outside the scope of the claims, wherein there is a fan drive turbine 208 driving a shaft 206 to in turn drive a fan rotor 202. A gear reduction 204 may be positioned between the fan drive turbine 208 and the fan rotor 202. This gear reduction 204 may be structured and operate like the gear reduction disclosed above. A compressor rotor 210 is driven by an intermediate pressure turbine 212, and a second stage compressor rotor 214 is driven by a turbine rotor 216. A combustion section 218 is positioned intermediate the compressor rotor 214 and the turbine section 216.

Figure 7 shows an embodiment 300 of the present invention, wherein a fan rotor 302 and a first stage compressor 304 rotate at a common speed. The gear reduction 306 (which is structured as disclosed above) is intermediate the compressor rotor 304 and a shaft 308 which is driven by a low pressure turbine section.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
a first shaft (308) defining an axis of rotation (A);
a speed reduction device (306) driven by the first shaft (308);
a fan (42) including a fan rotor (302) driven by the speed reduction device (306);
a compressor section (24) comprising a low pressure compressor (304) having a first plurality of compressor stages driven by the first shaft (308), and a high pressure compressor (52) having a second plurality of compressor stages driven by a second shaft (50); and
a turbine section (28) with a high pressure turbine (54) and a low pressure turbine (46), the low pressure turbine (46) driving the low pressure compressor (304) via the first shaft (308) and the high pressure turbine (54) driving the high pressure compressor (52) via the second shaft (50), wherein the speed reduction device (306) is positioned intermediate the low pressure turbine (46) and the low pressure compressor (304) such that the low pressure compressor (304) and the fan rotor (302) rotate at a common speed;
**characterised in that**:
at least one inducer stage (112, 130) is positioned aft of the fan (42) and coupled for rotation with the fan rotor (302), wherein the at least one inducer stage (112, 130) is positioned upstream of the compressor section (24);
the at least one inducer stage (112, 130) comprises one or more inducer blades (114, 132) fixed for rotation with the fan rotor (302) and a core inlet stator
fixed to a non-rotating engine structure (36); and
the core inlet stator is positioned radially outward of the inducer blades (114, 132) and is connected to a strut (120) that is supported by at least one bearing (122) such that the shaft (308) can rotate relative to the strut (120).

2. The gas turbine engine (20) according to claim 1, wherein the strut (120) is further supported by a thrust bearing (148) such that the fan rotor (302) can rotate relative to the strut (120).

3. The gas turbine engine (20) according to claim 1 or 2, wherein the core inlet stator comprises a variable vane.

4. The gas turbine engine (20) according to any preceding claim, wherein the core inlet stator is heated for anti-icing.

5. The gas turbine engine (20) according to any preceding claim, wherein the one or more inducer blades (114, 132) are heated for anti-icing.

6. The gas turbine engine (20) according to any preceding claim, wherein the at least one inducer stage (112, 120) comprises a plurality of inducer stages (112, 130) coupled to the fan rotor (302).

7. The gas turbine engine according to claim 6, wherein each inducer stage (112, 130) comprises one or more blades (114, 132) fixed for rotation with the fan rotor (302) and the core inlet stator fixed to a non-rotating engine structure (36), and the core inlet stator includes one or more vanes (118).

8. The gas turbine engine (20) according to any preceding claim, wherein the speed reduction device (306) comprises a gearbox including a sun gear (150) in meshing engagement with star gears (152) and a ring gear (154) in meshing engagement with the star gears (152), the ring gear (154) drives the fan (42), and the gearbox has a gear reduction ratio of greater than about 2.3.

9. The gas turbine engine (20) according to any of claims 1 to 7, wherein the speed reduction device (306) comprises a gearbox including a sun gear (160) in meshing engagement with a plurality of planetary gears (162) supported by a planet carrier (164) and a ring gear (166) in meshing engagement with the planet gears (162), the ring gear (166) is fixed and the planet carrier (164) provides input to the fan (42), and the gearbox has a gear reduction ratio of greater than about 2.3.

10. The gas turbine engine (20) according to any preceding claim, wherein the low pressure compressor (304) is positioned immediately aft of the at least one inducer stage (112, 130).

## Patentansprüche

1. Gasturbinenmotor (20), Folgendes umfassend:
eine erste Welle (308), die eine Rotationsachse (A) definiert;
eine Drehzahlreduzierungsvorrichtung (306), die durch die erste Welle (308) angetrieben wird;
ein Gebläse (42), das einen Gebläserotor (302) beinhaltet, der durch die Drehzahlreduzierungsvorrichtung (306) angetrieben wird;
einen Verdichterabschnitt (24), der einen Niederdruckverdichter (304) mit einer ersten Vielzahl von Verdichterstufen, die durch die erste Welle (308) angetrieben wird, und einen Hochdruckverdichter (52) mit einer zweiten Vielzahl von Verdichterstufen, die durch eine zweite Welle (50) angetrieben wird, umfasst; und
einen Turbinenabschnitt (28) mit einer Hochdruckturbine (54) und
einer Niederdruckturbine (46), wobei die Niederdruckturbine (46) über die erste Welle (308) den Niederdruckverdichter (304) antreibt und die Hochdruckturbine (54) über die zweite Welle (50) den Hochdruckverdichter (52) antreibt, wobei die Drehzahlreduzierungsvorrichtung (306) derart zwischen der Niederdruckturbine (46) und dem Niederdruckverdichter (304) positioniert ist, dass sich der Niederdruckverdichter (304) und
der Gebläserotor (302) mit einer gemeinsamen Drehzahl drehen;
**dadurch gekennzeichnet, dass**:
mindestens eine Induktorstufe (112, 130) hinter dem Gebläse (42) positioniert und mit dem Gebläserotor (302) drehgekoppelt ist, wobei die mindestens eine Induktorstufe (112, 130) stromaufwärts des Verdichterabschnitts (24) positioniert ist;
die mindestens eine Induktorstufe (112, 130) eine oder mehrere Induktorschaufeln (114, 132), die mit dem Gebläserotor (302) drehfest verbunden sind, und einen Kerneinlassstator, der an einer nicht rotierenden Motorstruktur (36) befestigt ist, umfasst; und
der Kerneinlassstator radial außerhalb der Induktorschaufeln (114, 132) positioniert und mit einer Strebe (120) verbunden ist, die durch mindestens ein Lager (122) derart gelagert ist, dass sich die Welle (308) relativ zur Strebe (120) drehen kann.

2. Gasturbinenmotor (20) nach Anspruch 1, wobei die Strebe (120) ferner durch ein Schublager (148) derart gelagert ist, dass sich der Gebläserotor (302) relativ zur Strebe (120) drehen kann.

3. Gasturbinenmotor (20) nach Anspruch 1 oder 2, wobei der Kerneinlassstator ein variables Schaufelblatt umfasst.

4. Gasturbinenmotor (20) nach einem der vorhergehenden Ansprüche, wobei der Kerneinlassstator zum Vereisungsschutz beheizt ist.

5. Gasturbinenmotor (20) nach einem der vorhergehenden Ansprüche, wobei die eine oder die mehreren Induktorschaufeln (114, 132) zum Vereisungsschutz beheizt sind.

6. Gasturbinenmotor (20) nach einem der vorhergehenden Ansprüche, wobei die mindestens eine Induktorstufe (112, 120) eine Vielzahl von Induktorstufen (112, 130) umfasst, die mit dem Gebläserotor (302) gekoppelt ist.

7. Gasturbinenmotor nach Anspruch 6, wobei jede Induktorstufe (112, 130) eine oder mehrere Schaufeln (114, 132) umfasst, die mit dem Gebläserotor (302) und dem Kerneinlassstator, der an einer nicht rotierenden Motorstruktur (36) befestigt ist, drehfest verbunden sind und der Kerneinlassstator ein oder mehrere Schaufelblätter (118) beinhaltet.

8. Gasturbinenmotor (20) nach einem der vorhergehenden Ansprüche, wobei die Drehzahlreduzierungsvorrichtung (306) ein Getriebe umfasst, das ein Sonnenrad (150) in Verzahnungseingriff mit Sternrädern (152) und ein Hohlrad (154) in Verzahnungseingriff mit den Sternrädern (152) umfasst, wobei das Hohlrad (154) das Gebläse (42) antreibt und das Getriebe ein Untersetzungsverhältnis von mehr als ungefähr 2,3 aufweist.

9. Gasturbinenmotor (20) nach einem der Ansprüche 1 bis 7, wobei die Drehzahlreduzierungsvorrichtung (306) ein Getriebe umfasst, das ein Sonnenrad (160) in Verzahnungseingriff mit einer Vielzahl von Planetenrädern (162) beinhaltet, die durch einen Planetenträger (164) und ein Hohlrad (166) in Verzahnungseingriff mit den Planetenrädern (162) getragen wird, wobei das Hohlrad (166) feststehend ist und der Planetenträger (164) dem Gebläse (42) einen Eingang bereitstellt und das Getriebe ein Untersetzungsverhältnis von mehr als ungefähr 2,3 aufweist.

10. Gasturbinenmotor (20) nach einem der vorhergehenden Ansprüche, wobei der Niederdruckverdichter (304) unmittelbar hinter der mindestens einen Induktorstufe (112, 130) positioniert ist.

## Revendications

1. Moteur à turbine à gaz (20) comprenant :
un premier arbre (308) définissant un axe de rotation (A) ;
un dispositif de réduction de vitesse (306) entraîné par le premier arbre (308) ;
une soufflante (42) comportant un rotor de soufflante (302) entraîné par le dispositif de réduction de vitesse (306) ;
une section de compresseur (24) comprenant un compresseur basse pression (304) ayant une première pluralité d'étages de compresseur entraînés par le premier arbre (308) et un compresseur haute pression (52) ayant une seconde pluralité d'étages de compresseur entraînés par un second arbre (50) ; et
une section de turbine (28) avec une turbine haute pression (54) et une turbine basse pression (46), la turbine basse pression (46) entraînant le compresseur basse pression (304) par l'intermédiaire du premier arbre (308) et la turbine haute pression (54) entraînant le compresseur haute pression (52) par l'intermédiaire du second arbre (50), dans lequel le dispositif de réduction de vitesse (306) est positionné entre la turbine basse pression (46) et le compresseur basse pression (304) de sorte que le compresseur basse pression (304) et le rotor de soufflante (302) tournent à une vitesse commune ;
**caractérisé en ce que** :
au moins un étage inducteur (112, 130) est positionné à l'arrière de la soufflante (42) et couplé en rotation avec le rotor de soufflante (302), dans lequel l'au moins un étage inducteur (112, 130) est positionné en amont de la section de compresseur (24) ;
l'au moins un étage inducteur (112, 130) comprend une ou plusieurs pales d'inducteur (114, 132) fixées pour tourner avec le rotor de soufflante (302) et un stator d'entrée de noyau fixé à une structure de moteur non rotative (36) ; et
le stator d'entrée de noyau est positionné radialement vers l'extérieur des pales d'inducteur (114, 132) et est relié à une jambe de force (120) qui est supportée par au moins un palier (122) de sorte que l'arbre (308) peut tourner par rapport à la jambe de force (120).

2. Moteur à turbine à gaz (20) selon la revendication 1, dans lequel la jambe de force (120) est en outre supportée par un palier de butée (148) de sorte que le rotor de soufflante (302) peut tourner par rapport à la jambe de force (120).

3. Moteur à turbine à gaz (20) selon la revendication 1 ou 2, dans lequel le stator d'entrée de noyau comprend une aube variable.

4. Moteur à turbine à gaz (20) selon une quelconque revendication précédente, dans lequel le stator d'entrée de noyau est chauffé pour l'antigivrage.

5. Moteur à turbine à gaz (20) selon une quelconque revendication précédente, dans lequel les une ou plusieurs pales d'inducteur (114, 132) sont chauffées pour l'antigivrage.

6. Moteur à turbine à gaz (20) selon une quelconque revendication précédente, dans lequel l'au moins un étage inducteur (112, 120) comprend une pluralité d'étages inducteurs (112, 130) couplés au rotor de soufflante (302).

7. Moteur à turbine à gaz selon la revendication 6, dans lequel chaque étage inducteur (112, 130) comprend une ou plusieurs pales (114, 132) fixées pour tourner avec le rotor de soufflante (302) et le stator d'entrée de noyau fixé à une structure de moteur non rotative (36), et le stator d'entrée de noyau comporte une ou plusieurs aubes (118).

8. Moteur à turbine à gaz (20) selon une quelconque revendication précédente, dans lequel le dispositif de réduction de vitesse (306) comprend une boîte de vitesses comportant une roue solaire (150) en prise avec des engrenages en étoile (152) et une couronne dentée (154) en prise avec les engrenages en étoile (152), la couronne dentée (154) entraîne la soufflante (42) et la boîte de vitesses a un rapport de démultiplication supérieur à environ 2,3.

9. Moteur à turbine à gaz (20) selon l'une quelconque des revendications 1 à 7, dans lequel le dispositif de réduction de vitesse (306) comprend une boîte de vitesses comportant une roue solaire (160) en prise avec une pluralité d'engrenages planétaires (162) supportés par un support planétaire (164) et une couronne dentée (166) en prise avec les engrenages planétaires (162), la couronne dentée (166) est fixe et le support planétaire (164) fournit une entrée à la soufflante (42) et la boîte de vitesses a un rapport de démultiplication supérieur à environ 2,3.

10. Moteur à turbine à gaz (20) selon une quelconque revendication précédente, dans lequel le compresseur basse pression (304) est positionné immédiatement à l'arrière de l'au moins un étage inducteur (112, 130).
